(19) Europäisches Patentamt
European Patent Office
Office européen des brevets

(11) **EP 1 343 661 B1**

(12) **EUROPÄISCHE PATENTSCHRIFT**

(45) Veröffentlichungstag und Bekanntmachung des Hinweises auf die Patenterteilung:
**23.06.2004 Patentblatt 2004/26**

(51) Int Cl.⁷: **B60R 21/01**

(21) Anmeldenummer: 01987609.3

(22) Anmeldetag: **19.10.2001**

(86) Internationale Anmeldenummer:
**PCT/DE2001/003991**

(87) Internationale Veröffentlichungsnummer:
**WO 2002/040321 (23.05.2002 Gazette 2002/21)**

(54) **VORRICHTUNG UND VERFAHREN ZUR SEITENAUFPRALLERKENNUNG**

DEVICE AND METHOD FOR SIDE-IMPACT IDENTIFICATION

DISPOSITIF ET PROCEDE DE RECONNAISSANCE DE CHOC LATERAL

(84) Benannte Vertragsstaaten:
**DE FR GB IT SE**

(30) Priorität: **18.11.2000 DE 10057258**

(43) Veröffentlichungstag der Anmeldung:
**17.09.2003 Patentblatt 2003/38**

(73) Patentinhaber: **Robert Bosch GmbH**
**70442 Stuttgart (DE)**

(72) Erfinder:
• **MATTES, Bernhard**
**74343 Sachsenheim (DE)**
• **ZABLER, Erich**
**76297 Stutensee (DE)**
• **KOCHER, Pascal**
**67530 Ottrott (FR)**
• **BURBAUM, Christoph**
**70469 Stuttgart (DE)**
• **RECKNAGEL, Rolf-Juergen**
**07747 Jena (DE)**

(56) Entgegenhaltungen:
**EP-B- 0 667 822        DE-A- 3 942 343**

## Beschreibung

Stand der Technik

Die Erfindung geht aus von einer Vorrichtung bzw. einem Verfahren zur Seitenaufprallerkennung nach der Gattung der unabhängigen Patentansprüche.

Aus der Patentschrift EP-667 822 ist eine Vorrichtung zur Aufprallerkennung bekannt, bei der ein Drucksensor in einem Seitenteil einer Fahrzeugkarosserie angeordnet ist. Bei einem Seitenaufprall wird der in dem Seitenteil auftretende adiabatische Druckanstieg zur Seitenaufprallerkennung ausgewertet. Das Seitenteil ist dabei weitgehend geschlossen. Adiabatisch bedeutet, dass die Wärmemenge konstant bleibt.

Vorteile der Erfindung

Die erfindungsgemäße Vorrichtung bzw. das erfindungsgemäße Verfahren zur Seitenaufprallerkennung mit den Merkmalen der unabhängigen Patentansprüche hat demgegenüber den Vorteil, dass die Verwendung eines Temperatursensors, der in dem Seitenteil der Fahrzeugkarosserie angeordnet ist, einfacher als ein Drucksensor ist. Damit kommt es zu einer Aufwandsersparnis. Ebenso ist keine Filterung von Störsignalen wie akustischen Frequenzen notwendig. Darüber hinaus ist die erfindungsgemäße Vorrichtung bzw. das erfindungsgemäße Verfahren robust und reagiert auf echte Verformungen der Fahrzeugkarosserie. Damit ist das erfindungsgemäße Verfahren bzw. die erfindungsgemäße Vorrichtung unempfindlicher gegenüber auftretenden Ereignissen (Schlaglochdurchfahrt oder Bordsteinkantenüberfahrt oder Türzuschlagen), die einen Seitenaufprall suggerieren, jedoch nicht zum Auslösen eines Rückhaltesystems führen sollen.

Durch die in den abhängigen Ansprüchen aufgeführten Maßnahmen und Weiterbildungen sind vorteilhafte Verbesserungen der erfindungsgemäßen Vorrichtung bzw. des erfindungsgemäßen Verfahrens zur Seitenaufprallerkennung möglich.

Besonders vorteilhaft ist, dass der Temperatursensor als ein mikromechanischer Sensor ausgebildet ist, weshalb der Temperatursensor einfach und als Massenprodukt herstellbar ist, wobei ein mikromechanischer Sensor ein sehr genauer Temperatursensor sein kann.

Durch die Ausbildung eines Gehäuses um den Temperatursensor in dem Seitenteil des Fahrzeugs wird vorteilhafterweise ein Schutz vor Einstrahlung gewonnen und der adiabatische Effekt wird vergrößert, da die Luft um den Temperatursensor besser abgedichtet ist.

Weiterhin ist es von Vorteil, dass durch die Verwendung eines Beschleunigungssensors ein Plausibilitätssignal erzeugt wird, mit dem ein Auslösesignal, das aufgrund der Messung mit dem Temperatursensor gewonnen wurde, überprüft wird. Damit werden ungewollte Auslöseentscheidungen für ein Rückhaltemittel unterdrückt. Dies verhindert unnötige Verletzungen und spart Kosten für einen Anwender eines Rückhaltesystems. Es ist dabei alternativ auch möglich, dass der Beschleunigungssensor die Auslöseentscheidung trifft und der Temperatursensor das Plausibilitätssignal liefert.

Es ist darüber hinaus von Vorteil, dass die Rückhaltemittel nur dann ausgelöst werden, wenn die absolute Temperaturänderung und ein Temperaturgradient vorgegebene Schwellwerte überschreiten. Insbesondere mit dem Temperaturgradient wird überprüft, dass die Temperaturerhöhung kurzzeitig ist, so dass ein Aufheizen durch Sonneneinstrahlung auf das Fahrzeug nicht zu einer ungewollten Auslösung führt.

Schließlich ist es auch von Vorteil, dass durch eine Anordnung von mehreren Temperatursensoren in einem Seitenteil eines Fahrzeugs einerseits Redundanz gewonnen wird und andererseits ein Temperatursensor dann jeweils nahe an einer Verformungsstelle des Seitenteils sein wird.

Zeichnung

Ausführungsbeispiele der Erfindung sind in der Zeichnung dargestellt und werden in der nachfolgenden Beschreibung näher erläutert. Es zeigt Figur 1 ein Seitenteil mit Temperatursensor, Figur 2 ein Blockschaltbild der erfindungsgemäßen Vorrichtung, Figur 3 ein Diagramm, das die Temperaturänderung der relativen Volumenänderung gegenüberstellt, Figur 4 ein mikromechanischer Temperatursensor in der Seitenansicht, Figur 5 eine Aufsicht des mikromechanischen Temperatursensors, Figur 6 der mikromechanische Temperatursensor in einem Gehäuse und Figur 7 ein Flußdiagramm des erfindungsgemäßen Verfahrens.

Beschreibung

Rückhaltesysteme wie Airbags werden zunehmend in Kraftfahrzeugen eingesetzt. Zunächst ist es dabei wichtig, einen Unfall rasch zu erkennen, um entsprechende Rückhaltemittel wie Airbags oder Gurtstraffer effizient einzusetzen. Ebenso wichtig ist es jedoch, eine ungewollte Auslösung von Rückhaltemitteln zu unterdrücken. Insbesondere bei einem Seitenaufprall ist die Reaktionszeit für die Seitenaufprallsensorik und die Steuerung der Rückhaltesysteme erheblich geringer als bei einem Frontalaufprall. Einen Seitenaufprall in einem Seitenteil der Fahrgastzelle zu detektieren, sollte durch die beginnende Verformung des Seitenteils frühzeitig erkannt werden. Da Seitenteile häufig einen weitgehend geschlossenen Körper, also einen Hohlraum darstellen, kommt es bei einer Verformung des Seitenteils zu einem adiabatischen Druckanstieg, der von einem adiabatischen, schnellen Temperaturanstieg begleitet wird. Erfindungsgemäß wird daher wenigstens ein entsprechend schneller Temperatursensor in einem Seitenteil eines Fahrzeugs angeordnet, um zur Seitenaufprallerkennung zu dienen. Durch Auswertung der absoluten Temperaturerhöhung und des Temperaturgradienten ist die Aufprallkraft beziehungsweise die Aufprallgeschwindigkeit sowie die Sicherstellung, dass es sich um einen adiabatischen Temperaturanstieg handelt, gewährleistet. Die Aufprallkraft beziehungsweise die Aufprallgeschwindigkeit lassen sich aus dem Ausmaß der Verformung des Seitenteil in einem vorgegebenen Zeitabschnitt ermitteln. Durch die Kombination des Temperatursensors mit einem Beschleunigungssensor wird eine Plausibilitätsuntersuchung eines Seitenaufprallsignals von dem Temperatursensor ermöglicht. Es wird also festgestellt, ob es sich tatsächlich um einen Seitenaufprall handelt und nicht um eine Temperaturerhöhung, die beispielsweise von einem Schweißgerät herrührt.

Der schnelle Temperatursensor kann vorteilhafterweise als mikromechanischer Temperatursensor ausgebildet werden. Die Mikromechanik ermöglicht einen Temperatursensor mit einer sehr genauen Temperaturmessung und ein mikromechanischer Sensor ist leicht als Massenprodukt herstellbar.

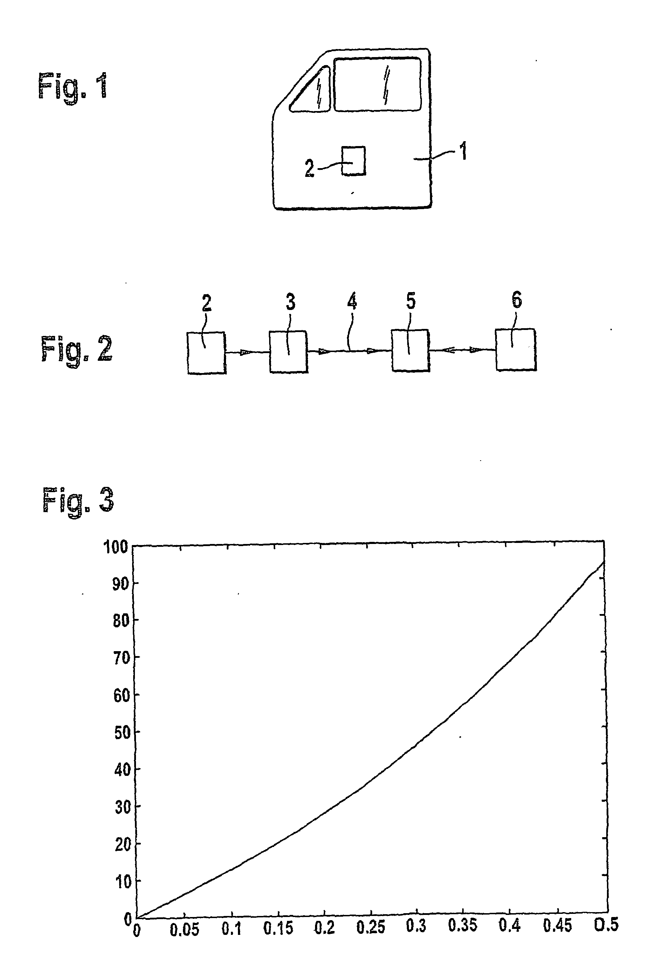

Figur 1 zeigt ein Seitenteil 1 eines Fahrzeugs, in dem ein Temperatursensor 2 angeordnet ist. Das Seitenteil 1, hier eine Fahrzeugtür weist in einem Hohlraum der Seitentür den Temperatursensor 2, der hier als Funktionsblock dargestellt ist, auf. Die auswertende Elektronik, die entweder mit dem Temperatursensor 2 in der Seitentür 1 angeordnet sein kann oder sich außerhalb an einem anderen Ort in dem Kraftfahrzeug befindet, ist hier nicht dargestellt. Dabei kann beispielsweise ein Meßwertverstärker mit dem Temperatursensor auf dem Chip integriert sein, während die Digitalisierung in einem Steuergerät stattfindet.

In Figur 2 ist ein Blockschaltbild der erfindungsgemäßen Vorrichtung dargestellt. Der Temperatursensor 2 ist an einen Eingang einer Signalverarbeitung 3 angeschlossen. Ein Datenausgang der Signalverarbeitung 3 führt auf einen Fahrzeugbus 4, an den ein Steuergerät 5 angeschlossen ist. Das Steuergerät 5 ist über einen Datenein-/-ausgang mit Rückhaltemitteln 6 verbunden. Teile der Elektronik, das ist der Meßwertverstärker und der Analog-Digital-Wandler, können alternativ wie oben beschrieben angeordnet sein.

Der Temperatursensor 2 liefert entsprechend der Temperatur elektrische Signale, die von der Signalverarbeitung 3 verstärkt und digitalisiert werden. Diese digitalen Daten werden dann über den Bus 4 an das Steuergerät 5 übertragen, das die digitalen Daten in der Weise auswertet, dass die absolute Temperaturerhöhung mit einem vorgegebenen Schwellwert und auch der Temperaturgradient verglichen werden. Der Temperaturgradient gibt die Temperaturänderung pro Zeit an. Damit ist es überprüfbar, ob es sich um einen adiabatischen Luftdruckanstieg handelt oder nicht. Der Temperaturanstieg muß bei einem adiabatischen Vorgang in einer sehr kurzen Zeit stattfinden. Liegen sowohl die absolute Temperaturerhöhung als auch der Temperaturgradient über vorgegebenen Schwellwerten, die experimentell bestimmt wurden, dann wird ein Auslösesignal erzeugt, das hier gegebenenfalls mit einem Meßsignal von einem Beschleunigungssensor überprüft wird. Das Meßsignal von dem Beschleunigungssensor gibt an, ob es sich tatsächlich um einen Seitenaufprall handeln kann oder nicht. Es findet also eine Plausibilitätsüberprüfung statt. Ist auch dieses Meßsignal über einer vorgegebenen Freigabeschwelle, dann wird die Auslöseentscheidung akzeptiert und die Rückhaltemittel 6 werden ausgelöst. Zu den Rückhaltemitteln 6 gehören hier Airbags und Gurtstraffer.

In Figur 3 ist ein Diagramm dargestellt, das die Temperaturänderung in einem als Hohlraum ausgebildeten Seitenteil eines Fahrzeugs in Beziehung zur relativen Volumenänderung setzt. Beispielsweise wird hier bei einer Volumenänderung um 10% bereits eine Temperaturerhöhung von 13 Kelvin erreicht. Dadurch ist gewährleistet, dass bereits bei einer frühzeitigen Verformung ein Seitenaufprall erkannt wird und eine Auslöseentscheidung erzeugt werden kann. Da die Tür nicht perfekt abgedichtet ist, entweicht während und nach dem Seitenaufprall Luft aus der Tür, so dass kurz nach der Deformierung der Druck und die Temperatur wieder annähernd die Werte wie vor dem Seitenaufprall erreicht haben werden. Das bedeutet, dass eine geringere Türabdichtung in einer geringeren Empfindlichkeit der erfindungsgemäßen Seitenaufprallerkennung resultieren wird. Zwischen der Lufttemperatur vor dem Ereignis, der Temperatur $T_0$, der Temperaturerhöhung $\Delta T$ und der Volumenänderung $\Delta V$ besteht ein Zusammenhang. Im Anfangsbereich für kleine Zeiten (im Millisekundenbereich) nach dem Seitenaufprall ist der Druckverlust durch die Türundichtigkeit vernachlässigbar, und es ergibt sich für die adiabatische Zustandsänderung mit Hilfe der gemessenen Temperatur $T_0$ +

$$\Delta T: \quad \Delta T = T_0 \left( \left( \frac{V_0 - \Delta V}{V_0} \right)^{1-\kappa} - 1 \right),$$

wobei $\kappa$ der Adiabatenexponent von der Luft ist und $V_0$ das Türvolumen. Hieraus kann die Temperaturänderung $\Delta T$ abgeschätzt werden, wobei für eine Umgebungstemperatur von $T_0$ = 293 Kelvin und eine Verkleinerung des Türvolumens von 10% sich eine Temperaturerhöhung von etwa 13 Kelvin ergibt.

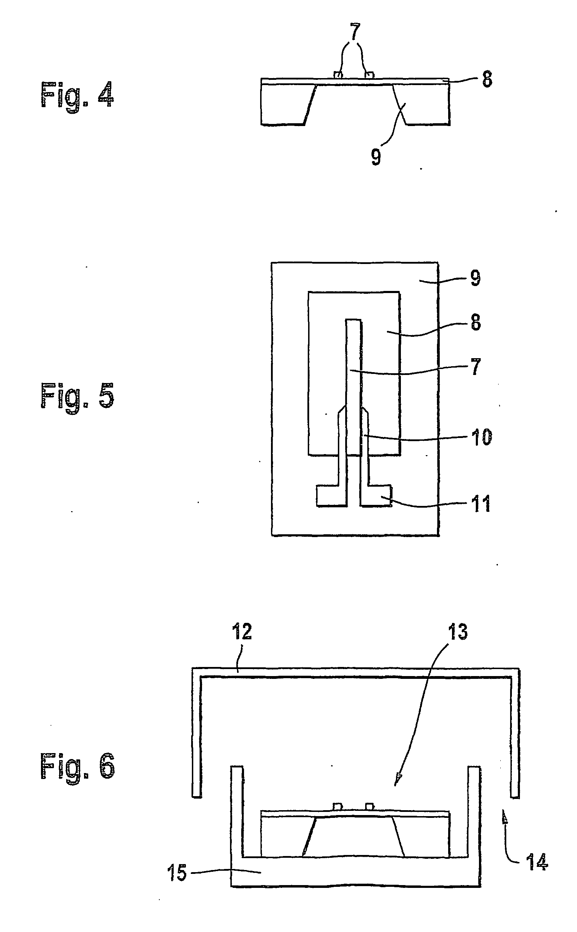

In Figur 4 ist eine Seitenansicht eines mikromechanischen Temperatursensors dargestellt, der in einem Seitenteil des Kraftfahrzeugs erfindungsgemäß angeordnet ist. Ein Temperatursensor 7 aus Platin ist auf einer Membran 8 mit schlechter Wärmeleitung aufgebracht. Die Membran 8 befindet sich wiederum auf einem Siliziumrahmen 9, der mit Mitteln der Mikrostrukturierung hergestellt wurde. Die Membran 8 ist hier entweder aus Siliziumdioxid oder aus Siliziumnitrid, die bekannte Dielektrika in der Halbleitertechnik sind, hergestellt. Diese Dielektrika weisen eine schlechte elektrische Leitfähigkeit und damit auch eine schlechte Wärmeleitfähigkeit auf. Alternativ sind andere Dielektrika einsetzbar.

Der Temperatursensor 7 ist als Platindünnschichtelement ausgeführt und weist einen temperaturabhängigen Widerstand auf. Durch Messung des Widerstands des Platinelements kann somit auf die Temperatur auf der Membran 8 geschlossen werden. Da die Wärmekapazität der Membran 8 aufgrund der geringen Dicke und der geringen Masse sehr niedrig ist, nimmt die Membran 8 sehr schnell die Temperatur der umgebenden Luft an. Aufgrund der geringen Wärmeleitfähigkeit ist die Membran 8 thermisch von dem Siliziumrahmen und der damit verbundenen Karosserie entkoppelt, so dass die Temperaturerhöhung des Platinelements erfolgen kann, ohne dass die thermisch träge Karosserie, die eine große Masse mit einer großen Wärmekapazität aufweist, mit aufgeheizt werden muß.

In Figur 5 ist eine Aufsicht des mikromechanischen Temperatursensors dargestellt. Auf dem Siliziumrahmen 9 sitzt die Membran 8. Der Platinsensor 7 weist Zuleitungen 10 (Leiterbahnen) auf, die zu sogenannten Bondpads führen, auf die die Anschlußdrähte gelötet bzw. gebondet werden, die die Verbindung zu anderen elektrischen bzw. elektronischen Komponenten herstellen.

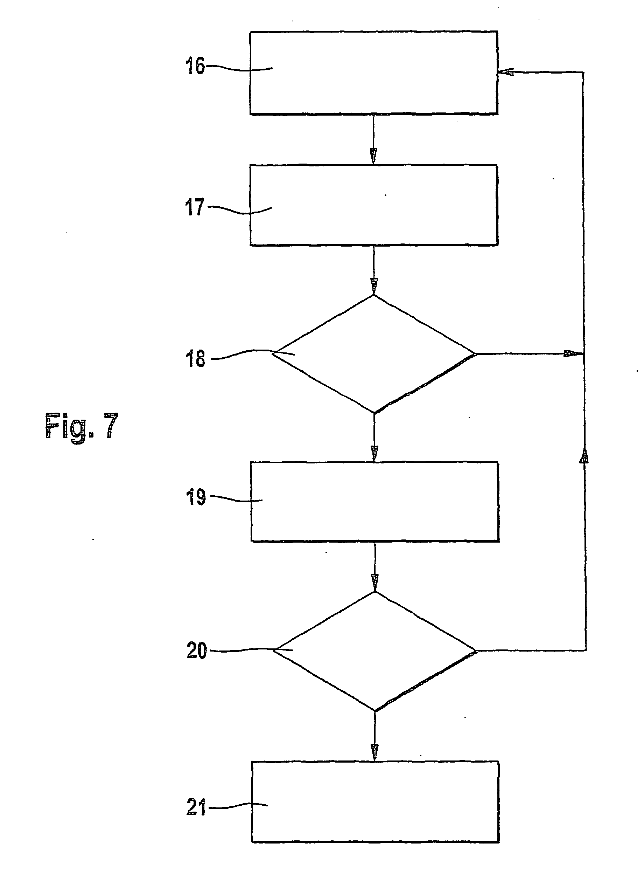

In Figur 6 ist der in Figur 4 und 5 dargestellte mikromechanische Temperatursensor 13 in einem Gehäuse untergebracht. Das Gehäuse weist einen Gehäuseboden 15, auf den der Temperatursensor 13 aufgebracht ist, auf und einen Gehäusedeckel 12, der eine Öffnung 14 aufweist, durch die eine Druckveränderung mit der Umgebungsluft übertragen wird. Diese Druckveränderung wird von einer Temperaturveränderung begleitet, sofern es sich um einen adiabatischen Prozeß handelt.

In Figur 7 ist das erfindungsgemäße Verfahren als Flußdiagramm dargestellt. In Verfahrensschritt 16 wird ein Temperatursignal von dem Temperatursensor 2 von der Signalverarbeitung 3 verstärkt und digitalisiert und an das Steuergerät 5 übertragen. In Verfahrensschritt 17 berechnet das Steuergerät 5 die absolute Temperaturerhöhung und den Temperaturgradienten. In Verfahrensschritt 18 wird die absolute Temperaturerhöhung und der Temperaturgradient mit vorgegebenen Schwellwerten verglichen, um festzustellen, ob es sich um einen Seitenaufprall handelt oder nicht. Werden beide Schwellwerte übertroffen, dann liegt ein Seitenaufprall vor und in Verfahrensschritt 19 wird dieser erkannte Seitenaufprall mit Signalen von einem Beschleunigungssensor überprüft. Ist auch das Signal von einem Beschleunigungssensor über einer Freigabeschwelle, d.h. die Beschleunigung in Seitenrichtung eines Fahrzeugs, dann wird in Verfahrensschritt 20 festgestellt, dass dies über der Freigabeschwelle liegt und eine Auslöseentscheidung wird in Verfahrensschritt 21 dem Rückhaltemittel 6 übertragen.

Wurde in Verfahrensschritt 18 festgestellt, dass entweder die absolute Temperaturerhöhung oder der Temperaturgradient unter dem jeweils vorgegebenen Schwellwert liegt, dann wird zu Verfahrensschritt 16 zurückgekehrt und es wird der aktuelle Temperaturwert abgefragt. Wurde in Verfahrensschritt 20 erkannt, dass das Signal von dem Beschleunigungssensor unter der vorgegebenen Freigabeschwelle liegt, dann wird ebenfalls zu Verfahrensschritt 16 zurückgekehrt, um das aktuelle Temperatursignal abzurufen.

Eine schnelle Aussage über die sich einstellende Temperaturerhöhung ΔT erhält man durch Temperaturgradientenmessung auch mit einem langsameren Temperatursensor. In den ersten 20ms nach Verformungsbeginn erfolgt die Temperaturerhöhung nach einer Exponentialfunktion:

$$T\,(t) = \Delta T\,(1 - e^{-t/\tau})$$

$\tau$ ist die thermische Zeitkonstante der Lufttemperaturänderung in dem Fahrzeughohlraum. Sie wird experimentell ermittelt und als konstant über der Temperatur und Lebensdauer angenommen.

Mißt man die Temperatur z.B. nach 0,5ms und nach 2ms, so erhält man:

$$T(0{,}5ms) = \Delta T(1 - e^{-0{,}5ms/\tau}),\ \text{bzw.}$$

$$T\,(2ms) = \Delta T(1 - e^{-2ms/\tau})\ \text{und damit}$$

$$\Delta T = (T\,(2ms) - T(0{,}5ms)){:}(e^{-0{,}5ms/\tau} - e^{-2ms/\tau}).$$

Der relativ langsame Temperatursensor nimmt die Temperaturerhöhung ΔT z.B. erst nach 50ms, also viel zu spät, an. Trotzdem erhält man mit diesem „Trick" bereits nach 2ms eine Information über das sich einstellende ΔT, das dann mit einem vorgegebenen Schwellwert verglichen wird, um einen Seitenaufprall zu detektieren.

Eine alternative Methode besteht darin, die erste Ableitung des Temperaturverlaufs auszuwerten. Der tatsächliche Temperaturanstieg ist dabei wie eine Sprungfunktion zu betrachten, die auf ein thermisches Ersatzschaltbild des Temperatursensors bestehend aus einem thermischen Widerstand r und eine thermischen Kapazität besteht. Die Temperatur wird dabei über der thermischen Kapazität abgegriffen. Aus dem analogen Spannungsumlauf und der Gleichung für den Strom ergibt sich eine Differentialgleichung, die die Sprungfunktion durch eine Summe aus der gewichteten ersten zeitlichen Ableitung des Temperaturverlaufs und dem Temperaturverlauf an sich nachbildet. Die Gewichtung ergibt sich aus den Werten für den thermischen widerstand und der thermischen Kapazität, die von den technologischen Eigenschaften des Temperatursensors abhängen. Damit kann man dann mit einem langsamen Sensor bereits nach wenigen ms Aussagen über den Temperaturanstieg machen. In einer weiteren Ausgestaltung ist vorgesehen, dass allein die erste zeitliche Ableitung des Temperaturverlaufs zur Voraussage über den Temperaturanstieg verwendet wird.

**Patentansprüche**

1. Vorrichtung zur Seitenaufprallerkennung bei einem Fahrzeug, wobei die Vorrichtung wenigstens einen Sensor (2) in einem als Hohlraum ausgebildeten Seitenteil (1) einer Fahrzeugkarosserie aufweist, wobei der wenigstens eine Sensor (2) mit einem Steuergerät (5) verbindbar ist, **dadurch gekennzeichnet, dass** der wenigstens eine Sensor (2) als Temperatursensor ausgebildet ist und dass das Steuergerät (5) einen Temperaturanstieg, den der wenigstens eine Temperatursensor (2) in dem Seitenteil (1) mißt, zur Seitenaufprallerkennung verwendet.

2. Vorrichtung nach Anspruch 1, **dadurch gekennzeichnet, dass** der wenigstens eine Temperatursensor (2) als mikromechanischer Temperatursensor (13) ausgebildet ist.

3. Vorrichtung nach Anspruch 1 oder 2, **dadurch gekennzeichnet, dass** der wenigstens eine Temperatursensor (2) in einem Gehäuse (12, 15) in dem Seitenteil (1) untergebracht ist.

4. Vorrichtung nach einem der vorhergehenden Ansprüche, **dadurch gekennzeichnet, dass** die Vorrichtung wenigstens einen Beschleunigungssensor aufweist, der mit dem Steuergerät (5) verbindbar ist.

5. Vorrichtung nach einem der vorhergehenden Ansprüche, **dadurch gekennzeichnet, dass** das Steuergerät (5) Mittel zur Auslösung eines Rückhaltemittels (6) bei einem Seitenaufprall aufweist, wobei das Steuergerät (5) die absolute Temperaturänderung und/oder eine zeitliche Ableitung des Temperaturanstiegs in dem Seitenteil (1) jeweils mit wenigstens einem vorgegebenen Schwellwert vergleicht und eine Auslöseentscheidung in Abhängigkeit von wenigstens einem dieser Vergleichen trifft.

6. Vorrichtung nach Anspruch 4 oder 5, **dadurch gekennzeichnet, dass** das Steuergerät (5) ein Signal von dem wenigstens einen Beschleunigungssensor mit einer Freigabeschwelle vergleicht und die Auslöseentscheidung freigibt, wenn das Signal die Freigabeschwelle überschreitet.

7. Vorrichtung nach einem der vorhergehenden Ansprüche, **dadurch gekennzeichnet, dass** die Vorrichtung in einem Seitenteil (1) mehrere Temperatursensoren aufweist, die an unterschiedlichen Orten im als Hohlraum ausgebildeten Seitenteil (1) plazierbar sind.

8. Verwendung eines Temperatur sensors, der in einem als Hohlraum ausgebildeten Seitenteil (1) eines Kraftfahrzeugs angeordnet ist, zur Seitenaufprallerkennung.

9. Verfahren zur Seitenaufprallerkennung bei einem Fahrzeug, wobei Signale von einem Sensor (2) in einem als Hohlraum ausgebildeten Seitenteil (1) einer Fahrzeugkarosserie zur Seitenaufprallerkennung verwendet werden, **dadurch gekennzeichnet, dass** Signale von einem Temperatursensor (2) in dem Seitenteil (1) erzeugt werden und dass ein Seitenaufprall erkannt wird, wenn der Temperatursensor (2) einen Temperaturanstieg mißt.

10. Verfahren nach Anspruch 9, **dadurch gekennzeichnet, dass** bei einem Seitenaufprall die absolute Temperaturänderung und/oder der Temperaturgradient des Temperaturanstiegs jeweils mit mindestens einem Schwellwert verglichen werden und dass in Abhängigkeit von wenigstens einem dieser Vergleiche eine Auslöseentscheidung getroffen wird.

11. Verfahren nach Anspruch 10, **dadurch gekennzeichnet, dass** ein Signal von einem Beschleunigungssensor mit einer Freigabeschwelle verglichen wird und dass die Auslöseentscheidung freigegeben wird, wenn das Signal die Freigabeschwelle überschreitet.

12. Steuergerät zur Durchführung des Verfahrens nach einem der Ansprüche 9 bis 11, **dadurch gekennzeichnet, dass** das Steuergerät (5) mit einem Temperatursensor (2) verbindbar ist.

**Claims**

1. Device for detecting side impacts in a vehicle, the device having at least one sensor (2) in a side part (1), embodied as a cavity, of the bodywork of a vehicle, it being possible to connect the at least one sensor (2) to a control unit (5), **characterized in that** the at least one sensor (2) is embodied as a temperature sensor, and **in that** the control unit (5) uses a rise in temperature, which the at least one temperature sensor (2) in the side part (1) measures, for detecting side impacts.

2. Device according to Claim 1, **characterized in that** the at least one temperature sensor (2) is embodied as a micromechanical temperature sensor (13).

3. Device according to Claim 1 or 2, **characterized in that** the at least one temperature sensor (2) is accommodated in a housing (12, 15) in the side part (1).

4. Device according to one of the preceding claims, **characterized in that** the device has at least one acceleration sensor which can be connected to the control unit (5).

5. Device according to one of the preceding claims, **characterized in that** the control unit (5) has means for triggering a restraint means (6) when a side impact occurs, the control unit (5) comparing the absolute change in temperature and/or a time derivative of the rise in temperature in the side part (1) in each case with at least one predefined threshold value, and the said unit making a triggering decision as a function of at least one of these comparisons.

6. Device according to Claim 4 or 5, **characterized in that** the control unit (5) compares a signal from the at least one acceleration sensor with an enabling threshold and enables the triggering decision if the signal exceeds the enabling threshold.

7. Device according to one of the preceding claims, **characterized in that** the device in a side part (1) has a plurality of temperature sensors which can be placed at different locations in the side part (1) which is embodied as a cavity.

8. Use of a temperature sensor which is arranged in a side part (1), embodied as a cavity, of a motor vehicle, for detecting side impacts.

9. Method for detecting side impacts in a vehicle, signals from a sensor (2) in a side part (1), embodied as a cavity, of the bodywork of a vehicle being used for detecting side impacts, **characterized in that** signals are generated by a temperature sensor (2) in the side part (1), and **in that** a side impact is detected if the temperature sensor (2) measures a rise in temperature.

10. Method according to Claim 9, **characterized in that**, when there is a side impact, the absolute change in the temperature and/or the temperature gradient of the rise in temperature are respectively compared with at least one threshold value, and **in that** a triggering decision is made as a function of at least one of these comparisons.

11. Method according to Claim 10, **characterized in**

**that** a signal from an acceleration sensor is compared with an enabling threshold, and **in that** the triggering decision is enabled if the signal exceeds the enabling threshold.

12. Control unit for carrying out the method according to one of Claims 9 to 11, **characterized in that** the control unit (5) can be connected to a temperature sensor (2).

**Revendications**

1. Dispositif de reconnaissance de choc latéral dans un véhicule, comportant au moins un capteur (2) dans une partie latérale (1) en forme de volume creux d'une carrosserie de véhicule, le capteur (2) pouvant être raccordé à un appareil de commande (5),
**caractérisé en ce qu'**
au moins un capteur (2) est constitué par un capteur de température et l'appareil de commande (5) utilise, pour la reconnaissance de choc latéral, une hausse de température que mesure le capteur de température (2) dans la partie latérale (1).

2. Dispositif selon la revendication 1,
**caractérisé en ce que**
le capteur de température (2) est un capteur de température micromécanique (13).

3. Dispositif selon la revendication 1 ou 2,
**caractérisé en ce que**
le capteur de température (2) est installé dans un boîtier (12, 15) dans la partie latérale (1).

4. Dispositif selon l'une quelconque des revendications précédentes,
**caractérisé en ce que**
le dispositif présente au moins un capteur d'accélération qui peut être raccordé à l'appareil de commande (5).

5. Dispositif selon l'une quelconque des revendications précédentes,
**caractérisé en ce que**
l'appareil de commande (5) présente des moyens pour le déclenchement d'un moyen de retenue (6) lors d'un choc latéral, l'appareil de commande (5) comparant la variation absolue de température et/ou une dérivée temporelle de la hausse de température dans la partie latérale (1) chaque fois avec au moins une valeur de seuil prédéterminée et prenant une décision de déclenchement en fonction d'au moins une de ces comparaisons.

6. Dispositif selon la revendication 4 ou 5,
**caractérisé en ce que**

l'appareil de commande (5) compare un signal provenant d'au moins un capteur d'accélération avec un seuil de délivrance et délivre la décision de déclenchement lorsque le signal dépasse le seuil de délivrance.

7. Dispositif selon l'une quelconque des revendications précédentes,
   **caractérisé en ce que**
   le dispositif présente dans une partie latérale (1) plusieurs capteurs de température qui peuvent être placés en différents endroits dans la partie latérale (1) en forme de volume creux.

8. Utilisation d'un capteur de température, disposé dans une partie latérale (1) en forme de volume creux d'une carrosserie de véhicule, pour la reconnaissance d'un choc latéral.

9. Procédé de reconnaissance de choc latéral dans un véhicule, selon lequel on utilise des signaux en provenance d'un capteur (2) dans une partie latérale (1) en forme de volume creux d'une carrosserie de véhicule pour la reconnaissance de choc latéral,
   **caractérisé en ce que**
   des signaux sont produits par un capteur de température (2) dans la partie latérale (1) et on reconnaît un choc latéral lorsque le capteur de température (2) mesure une hausse de température.

10. Procédé selon la revendication 9,
    **caractérisé en ce que**
    lors d'un choc latéral, on compare la variation absolue de température et/ou le gradient de température de la hausse de température chaque fois avec au moins une valeur de seuil, et on prend une décision de déclenchement en fonction d'au moins une de ces comparaisons.

11. Procédé selon la revendication 10,
    **caractérisé en ce qu'**
    un signal provenant d'un capteur d'accélération est comparé avec un seuil de délivrance et on délivre la décision de déclenchement lorsque le signal dépasse le seuil de délivrance.

12. Appareil de commande pour la mise en oeuvre du procédé selon l'une quelconque des revendications 9 à 11,
    **caractérisé en ce que**
    l'appareil de commande (5) peut être raccordé à un capteur de température (2).

Fig. 1

Fig. 2

Fig. 3

Fig. 4

Fig. 5

Fig. 6

Fig. 7